(19) **Europäisches Patentamt**
**European Patent Office**
**Office européen des brevets**

(11) **EP 1 227 645 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(51) Int Cl.:
*H04M 3/493* *(2006.01)*    *H04M 1/2745* *(2006.01)*
*H04M 3/42* *(2006.01)*

(21) Anmeldenummer: **02100033.6**

(22) Anmeldetag: **18.01.2002**

(54) **Verfahren zur Speicherung und Verarbeitung von Rufnummern**

Method for recording and processing of call numbers

Procédé de mémorisation et traitement de numéros de téléphone

(84) Benannte Vertragsstaaten:
**DE FR GB IT**

(30) Priorität: **29.01.2001 DE 10103815**

(43) Veröffentlichungstag der Anmeldung:
**31.07.2002 Patentblatt 2002/31**

(73) Patentinhaber: **Siemens Enterprise Communications GmbH & Co. KG**
**81379 München (DE)**

(72) Erfinder: **Luers, Jürgen**
**33178, Borchen (DE)**

(74) Vertreter: **Fritzsche, Thomas et al**
**Fritzsche Patent**
**Naupliastrasse 110**
**81545 München (DE)**

(56) Entgegenhaltungen:
**EP-A- 0 631 415    EP-A- 0 631 418**
**DE-A- 19 828 400**

**Beschreibung**

Die Erfindung betrifft ein Verfahren zur Speicherung und Verarbeitung von Rufnummern in einem Telekommunikationsnetz, insbesondere unter Verwendung eines sogenannten kanonischen Rufnummern-Formats.

Die einzelnen Anschlüsse bzw. Endgeräte eines Telekommunikationsnetzes haben anschluß- bzw. endgerätespezifische Rufnummern. Die Rufnummern weisen dabei in der Regel mehrere unterschiedliche Komponenten auf. Bei Festnetzen umfassen diese Komponenten insbesondere einen Länder- und einen Ortskode des Anschlusses bzw. des Endgerätes sowie dessen - auf Land und Ort bezogene - Durchwahl. Bei Mobilfunknetzen umfassen die Komponenten einen Länderkode, eine Kennzeichnung des Netzes selbst sowie die Durchwahl. Die Rufnummern werden in der Regel auf den aktuellen Standort bezogen erfasst, und zwar sowohl als manuell eingegebene Rufnummern als auch als automatisch übermittelte Rufnummern, wie sie z.B. auf dem Display eines Endgeräts an einem ISDN-Anschluss oder eines Mobiltelefons als Rufnummer angezeigt werden.

Werden solche manuell eingegebenen oder übermittelten Rufnummern mit Bezug auf den aktuellen Standort (oder - bei Mobiltelefonen - das Land der Registrierung) des Anschlusses bzw. des Endgerätes in einer Datenbank abgelegt, kann diese Datenbank ("Telefonbuch") nicht ohne weiteres an einem anderen Standort oder gar in einem anderen Land zu einer automatischen Wahl einer gespeicherten Rufnummer über CTI-Anwendungen benutzt werden. Dies stellt eine Beeinträchtigung für weitgehend automatisierte Anwendungen für gespeicherte Rufnummern dar, die sowohl international agierende Unternehmen und Organisationen als auch Privatpersonen betrifft.

Der geschilderte Zusammenhang führt auch zu Problemen bei der sicheren Identifikation eines Anrufers beispielsweise in einem Call-Center.

Das unter Microsoft Windows laufende Programm TAPI (Telephony Application Programming Interface) bietet eine Funktion "lineTranslateAddress()", die eine sogenannte kanonische Rufnummer unter Berücksichtigung des aktuellen Standorts in eine direkt wählbare Rufnummer transformiert. Der wichtigste erste Teil des - herkömmlichen - kanonischen Formats ist definiert als

+ Länderkode (Ortsvorwahl) Durchwahl.

Die Rufnummer bzw. der Anschluss 8-20715 im Ort Paderborn - mit der zugeordneten Ortsvorwahl 5251 - in Deutschland - mit dem zugeordneten Länderkode 49 - ist im kanonischen Format als die Ziffern-/Zeichenfolge "+49 (5251)8-20715" definiert. Mittels der erwähnten Funktion lineTranslateAddress() wird diese Rufnummer aus dem - herkömmlichen - kanonischen Format beispielsweise im Ort Berlin in Deutschland in die dort direkt wählbare Rufnummer 05251820715 transformiert.

Da jedoch in einer wählbaren Rufnummer die Ortsvorwahl nicht eindeutig und automatisch von der Durchwahl getrennt werden kann, bietet das Programm Microsoft TAPI keine Transformation in umgekehrter Richtung.

Eine automatische Transformation dieser Art ist bislang nicht bekannt. Bisher muß der Angerufene die Umsetzung manuell vornehmen. Im Extremfall muss er die Rufnummer verwerfen, wenn sie aus einem Telefonbuch mit unbekanntem vorausgesetztem Standort stammt. Zur Realisierung eines systematischen Vorgehens muss ihm zur individuellen Transformation die Bildungsregel am ursprünglichen Standort, mit der er aus der Rufnummer wieder auf eine weltweit eindeutige Rufnummer schließen kann, bekannt sein.

Aus der deutschen Offenlegungsschrift DE 198 28 400 A1 ist beispielsweise ein Verfahren für eine Speicherung von Rufnummern in einem Datenhaltungssystem mit Computer Telephony Integration - in der Literatur häufig mit CTI abgekürzt - bekannt, wobei die Rufnummern - wenn möglich - vor der Speicherung automatisch in ein einheitliches Format transformiert werden. Hierbei werden die Rufnummern im Rahmen einer automatischen Überprüfung analysiert. Ist das Ergebnis der Analyse positiv, werden die überprüften Rufnummern in das einheitliche Format gewandelt und gespeichert. Ist das Ergebnis der Analyse dagegen negativ, werden die Rufnummern für eine spätere manuelle Überprüfung unverändert gespeichert. Als einheitliches Format wird dabei das kanonische Format verwendet.

Im Rahmen der Benutzungsrichtlinien bzw. -hinweise für Telekommunikationsanlagen bzw. entsprechende Programme, beispielsweise des bereits erwähnten Microsoft TAPI, werden die Benutzer neuerdings auch zu einer Erfassung der Rufnummern in Form weltweit eindeutiger Rufnummern - beispielsweise nach dem herkömmlichen kanonischen Format von TAPI - angehalten. Dies ist wegen der mangelnden Verlässlichkeit der Notierungen problematisch - insbesondere deshalb, weil der Länderkode falsch sein kann, die Ortsvorwahl (unkorrekt) eine führende "0" erhält oder der Länderkode und die Ortsvorwahl nicht korrekt voneinander getrennt sind. Ein spezielles Problem stellen unsystematisch eingefügte Sonderzeichen dar, wie z.B. das "-" als Separator zwischen der Nummer einer Telekommunikationsanlage (im obigen Ausführungsbeispiel der "8") und der Durchwahl (im obigen Ausführungsbeispiel der "20715").

Bei Call-Centern werden daher mitunter betreiberspezifische Algorithmen angewandt, die die letzten Stellen der bereits gespeicherten Rückrufnummer bestimmen und dann (eventuell in mehreren Schritten eines iterativen Prozesses) den Anrufer zu identifizieren versuchen. Gleiche Endnummern mit unterschiedlicher Vorwahl können mit diesen Verfahren jedoch nicht sicher voneinander unterschieden werden. Beim Auffinden nicht zu vieler Treffer wird dem Benutzer in der Regel ein Auswahldialog angeboten, aus dem er den nach seiner Meinung zutreffenden Teilnehmer auswählen kann.

Der Erfindung liegt die Aufgabe zugrunde, ein universelles und verlässliches Verfahren der gattungsgemäßen Art anzugeben, welches die Speicherung weltweit gültiger Rufnummern und deren eindeutige Verarbeitung erlaubt.

Diese Aufgabe wird durch ein Verfahren mit den Merkmalen des Anspruchs 1 gelöst.

Die Erfindung basiert auf dem grundlegenden Gedanken der Bereitstellung eines neuen kanonischen Formats - kurz NCF - für die Speicherung der Rufnummern eines Telekommunikationsnetzes. Dieses Format ähnelt in gewisser Weise dem herkömmlichen kanonischen Format und ermöglicht eine schnelle indexunterstützte Suche mit einem einfachen "=" innerhalb von Datenbanken. Zur Anwahl einer Rufnummer wird die Rufnummer aus diesem neuen kanonischen Format NCF in eine kanonische Rufnummer umgewandelt, die über bekannte Funktionen - insbesondere die oben erwähnte Funktion "lineTranslateAddress()" von Microsoft TAPI - weiter in eine wählbare Rufnummer transformiert wird.

Beim herkömmlichen kanonischen Format wird die Ortsvorwahl mit Klammern () vom Länderkode und der Durchwahl abgetrennt. Die Position der schließenden Klammer kann jedoch aus empfangenen Rufnummern nicht korrekt erkannt werden.

Aus diesem Grund ist das neue kanonische Format NCF folgendermaßen gestaltet:

```
- Länderkode | Trailer.
```

Der Gedankenstrich "-" dient zur Kennzeichnung des neuen kanonischen Formats NCF. Der senkrechte Strich "|" trennt den Länderkode vom Trailer ab, der seinerseits aus der Ortsvorwahl und der Durchwahl besteht. Für den Länderkode, die Ortsvorwahl und die Durchwahl sind nur die Ziffern 0 bis 9 zugelassen. Insbesondere sind keine Leerzeichen oder andere Separatoren, z.B. zur Gruppierung von Komponenten der Gesamt-Rufnummer, zulässig.

Zur Ausführung einer Adresstranslationsfunktion wird die Rufnummer in einem ersten Transformationsschritt aus dem neuen kanonischen Format NCF in eine Rufnummer im herkömmlichen kanonischen Format, insbesondere mit der Struktur "+ Länderkode (Ortsvorwahl) Durchwahl" und aus diesem in einem zweiten Transformationsschritt gemäß herkömmlichem Verfahren in eine wählbare Rufnummer umgewandelt.

Da in einer Rufnummer die Trennposition zwischen Ortsvorwahl und Durchwahl nicht eindeutig und sicher detektiert werden kann, wird diese Trennposition willkürlich festgelegt. Obwohl unter diesen Umständen die Ortsvorwahl und die Durchwahl jede für sich genommen falsch sein kann, wird diese falsch getrennte kanonische Rufnummer dennoch fehlerfrei in eine wählbare Rufnummer transformiert.

Der erste Transformationsschritt, der das neue kanonische Format NCF in das herkömmliche kanonische Format umwandelt, umfaßt die folgenden Teilschrittfolge:

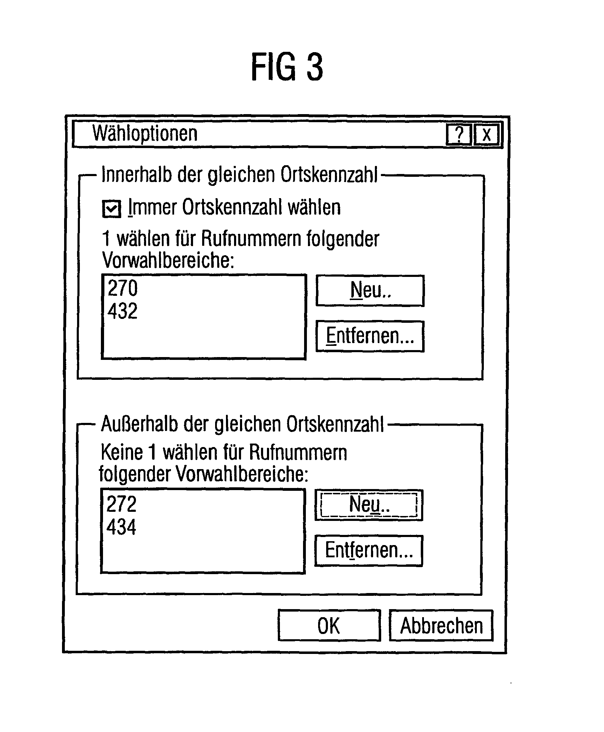

(1) "-" in "+" wandeln
(2) Länderkode unverändert beibehalten
(3) Öffnende Klammer einfügen
(4) Wenn der angegebene Länderkode und der Länderkode des aktuellen Standorts übereinstimmen, Umsetzung an Punkt 9 fortsetzen
(5) Einfügen des auf "|" folgenden Trailers mit Ausnahme der letzten Ziffer
(6) Einfügen der schließenden Klammer
(7) Beibehalten des restlichen Teils des Trailers als Durchwahl
(8) Fertig
(9) Wenn der auf | folgende Trailer mit der Ortsvorwahl des aktuellen Standorts beginnt, Umsetzung an Punkt 13 fortsetzen
(10) Wenn der auf | folgende Trailer nicht mit einer der Ortsvorwahlen beginnt, für die spezielle Ausnahmen definiert wurden (vergleiche untere Liste in der Figur 3), Umsetzung an Punkt 5 fortsetzen
(11) Einfügen des ersten Teils des Trailers, der gleich der Ortsvorwahlausnahme ist
(12) Umsetzung an Punkt 6 fortsetzen
(13) Einfügen des ersten Teils des Trailers, der gleich der Ortsvorwahl des aktuellen Standorts ist
(14) Umsetzung an Punkt 6 fortsetzen.

Der zweite Transformationsschritt wird mittels der bekannten Funktion "lineTranslateAddress()" in Microsoft TAPI ausgeführt.

Bei der Umsetzung prüfen bekannte Translationsfunktionen - wie beispielsweise die bekannte Funktion "lineTranslateAddress()" - ob die angegebene Ortsvorwahl gleich der Ortsvorwahl des aktuellen Standorts, oder gleich einer der in der unteren Ausnahmenliste in Figur 3 aufgeführten Ortsvorwahlen ist. Ist dies nicht der Fall, wird die angegebene Ortsvorwahl gefolgt von der Durchwahl unverändert ausgegeben. Die tatsächliche Trennposition zwischen Ortsvorwahl und Durchwahl kann nicht bestimmt werden, da hierfür umfangreiche Listen mit allen Ortsvorwahlen der Welt notwendig wären - die zudem ständig aktualisiert werden müssten. Hieraus ergibt sich, daß die bei der erwähnten Transformation eingeführte willkürlich gewählte Trennung zwischen Ortsvorwahl und Durchwahl das Ergebnis von Translationsfunktionen wie "lineTranslateAddress()" nicht beeinflusst.

Zur Translation einer (eingehenden) wählbaren Rufnummer in das neue kanonische Format NCF wird eine Länderkode-Liste aller gültigen Länderkodes sowie eine Information zum aktuellen Standort benötigt. Eine Länderkode-Liste liegt beispielsweise in jedem TAPI-konformen Translationssystem vor. Als Standortinformation können die von TAPI geführten Informationen genutzt werden. Stehen diese nicht zur Verfügung, müssen die entsprechenden Angaben oder ergänzende Angaben in Form einer Konfigurationsdatei zur Verfügung gestellt werden oder sind vom Benutzer auf andere geeignete Weise zu ermitteln. In einer bevorzugten Ausführung liegen die Standortdaten in Microsoft TAPI vor bzw. sind über dieses erfassbar.

Folgende Daten müssen zum aktuellen Standort verfügbar sein:

- Länderkode
- Ortsvorwahl
- Bildungsregeln für Rufnummern für die Fälle

 (a) Rufnummer aus dem gleichen Ortsnetz
 (b) Rufnummer aus einem fremden Ortsnetz des gleichen Landes
 (c) Rufnummer aus einem fremden Land

- Information, ob innerhalb des gleichen Ortsnetzes die Ortsvorwahl immer gewählt werden muß
- eine Liste derjenigen Ziffernfolgen, die zu einem Voranstellen einer "1" führen, wenn eine Rufnummer mit dieser Folge innerhalb des gleichen Ortsnetzes beginnt
- eine Liste derjenigen Ortsvorwahlen, bei denen eine führende "1" unterdrückt wird
- mögliche vorbereitende und nachbereitende Wählanteile wie z. B. Amtskennziffern und Zusatznummern, sowie die Information, inwieweit diese Anteile in einer empfangenen Rufnummer mitgeliefert werden.

TAPI-konforme Translationssysteme bieten diese Informationen bereits weitgehend an.

Vorteile und Zweckmäßigkeiten der Erfindung ergeben sich im Übrigen aus den Unteransprüchen.

Ein Ausführungsbeispiel der Erfindung wird im folgenden anhand der Zeichnung näher erläutert.

Dabei zeigen:

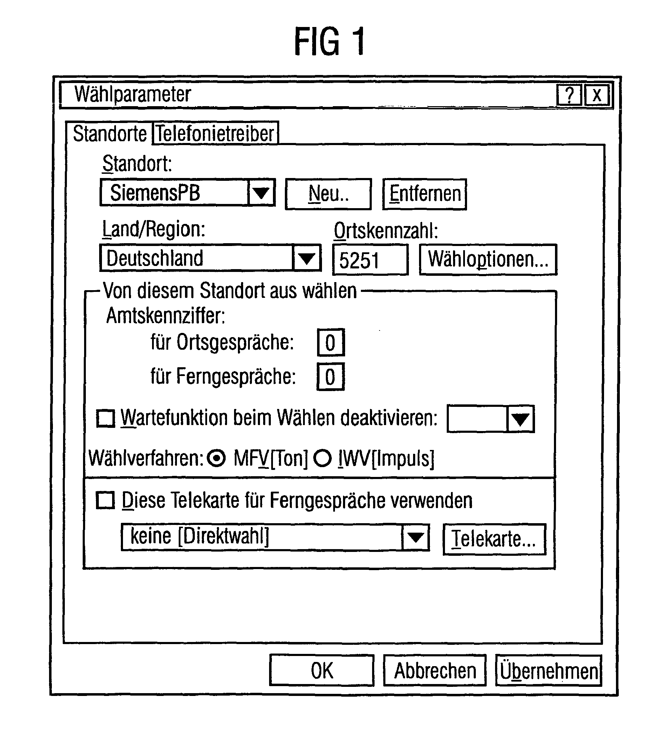

Fig.1 bis Fig. 3: Schirmbilder eines Programmablaufs der auf Windows-Systemen verfügbaren TAPI-Konfigu- ration.

Damit über eine TAPI-konforme CTI-Anwendung der zweite Transformationsschritt ausführbar ist, d.h. mittels einer herkömmlichen kanonischen Rufnummer ein Verbindungsaufbau gestartet werden kann, muss der aktuelle Standort korrekt angegeben worden sein. Dazu ist auf Windows-Systemen im Punkt "Systemsteuerung" das Telefon-Symbol anzuklicken, woraufhin im hier gewählten Beispiel der in Fig. 1 gezeigte Dialog angezeigt wird.

Im Beispiel wird unter dem willkürlich gewählten Standortnamen "Siemens PB" der Länderkode "49" für Deutschland und die Ortsvorwahl "5251" für den Ort Paderborn konfiguriert. Außerdem wird hier angegeben, über welche Kennziffern jeweils das "Amt" (die Vermittlungsstelle) erreicht werden kann. Dies ist hier für Orts- und Ferngespräche die Ziffer "0". Diese Angabe ist nur dann notwendig, wenn am Standort der Rufnummernwahl über eine Telefonanlage gewählt wird.

An diesem Standort wurden z.B. die folgenden kanonischen Rufnummern

 1. +49(5251)37983
 2. +49(89)894578
 3. +39(4251)782643

von lineTranslateAddress() in die wählbaren Rufnummern

 1. 037983
 2. 0089894578
 3. 000394251782643

gewandelt. Dabei dient die erste "0" einem Verbindungsaufbau über das "Amt".

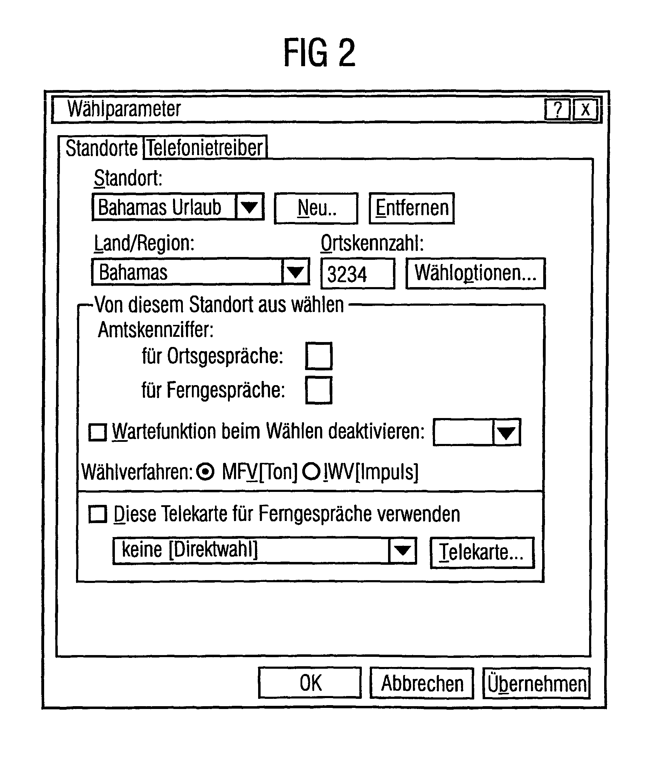

Unter der Annahme, der Benutzer des Verfahrens würde auf den Bahamas (Länderkode 1) in einem Ort mit der (hypothetischen) Ortsvorwahl 3234 eine Rufnummernwahl per CTI vornehmen wollen, würde der Dialog das Monitorbild nach Fig. 2 liefern. Hier könnten die in Fig. 3 dargestellten (hypothetischen) Wähloptionen angegeben werden.

Mit den dargestellten Einstellungen würden an diesem Standort z.B. die folgenden kanonischen Rufnummern

1. +49(5251)37983
2. +1(3234)37983
3. +1(3234)270379
4. +1(272)37983

von der Funktion lineTranslateAddress() in die wählbaren Rufnummern

1. 01149525137983
2. 323437983
3. 3234270379
4. 27237983

gewandelt.

Die Ausführung der Erfindung ist natürlich nicht auf dieses Beispiel beschränkt, sondern ebenso in einer Vielzahl von konkreten Eingaben sowie Abwandlungen möglich, die im Rahmen fachgemäßen Handelns liegen.

**Patentansprüche**

1. Verfahren zur Speicherung und Verarbeitung von wählbaren Rufnummern eines Telekommunikationsnetzes, insbesondere in einer an das Telekommunikationsnetz angeschlossenen Telekommunikationsanlage,
   **dadurch gekennzeichnet,**
   **dass** die wählbaren Rufnummern unter Nutzung einer Länderkode-Liste und einer Standortinformation in ein spezifisches, dem kanonischen Format ähnlichen Format (NCF) mit weltweiter Gültigkeit transformiert werden, wobei bei dem spezifischen Format (NCF) ein aus einer zusammenhängenden Ziffernfolge bestehender Trailer gebildet wird, der eine Ortsvorwahl und eine Durchwahl bzw. eine Netzkennzeichnung und eine Durchwahl der Rufnummern beinhaltet, wobei das spezifische Format (NCF) eine Struktur "LänderkodelTrailer" aufweist,
   **dass** die Rufnummern anschließend zusammen mit einer Kennzeichnung des spezifischen Formats (NCF) gespeichert werden, und
   **dass** zur Ausführung einer Adresstranslationsfunktion die Rufnummer in einem ersten Transformationsschritt aus dem spezifischen Format (NCF) in eine Rufnummer in einem kanonischen Format mit der Struktur "+Länderkode (Ortsvorwahl)Durchwahl" und aus diesem in einem zweiten Transformationsschritt in eine wählbare Rufnummer umgewandelt wird, wobei im Fall einer zwischen Ortsvorwahl und Durchwahl falsch getrennten kanonischen Rufnummer diese dennoch fehlerfrei in eine wählbare Rufnummer transformiert wird.

2. Verfahren nach Anspruch 1,
   **dadurch gekennzeichnet, dass**
   die Kennzeichnung des spezifischen Formats (NCF) als Voranstellung eines Bindestrichs ausgeführt wird.

3. Verfahren nach einem der vorangehenden Ansprüche,
   **dadurch gekennzeichnet, dass**
   zur Bildung der Rufnummerbestandteile, d.h. des Länderkodes, der Ortsvorwahl bzw. der Netzkennzeichnung und der Durchwahl nur die Ziffern 0 bis 9 und keine sonstigen Zeichen oder Leerzeichen verwendet werden.

4. Verfahren nach einem der vorangehenden Ansprüche,
   **dadurch gekennzeichnet, dass**
   der zweite Transformationsschritt mittels einer Funktion wie der bekannten Funktion "lineTranslateAddress()" in Microsoft TAPI ausgeführt wird.

5. Verfahren nach einem der vorangehenden Ansprüche,
   **dadurch gekennzeichnet, dass**
   der erste Transformationsschritt die folgende Teilschrittfolge umfasst:

(1) "-" in "+" wandeln

(2) Länderkode unverändert beibehalten

(3) Öffnende Klammer einfügen

(4) Wenn der angegebene Länderkode und der Länderkode des aktuellen Standorts übereinstimmen, Umsetzung an Punkt 9 fortsetzen

(5) Einfügen des auf "|" folgenden Trailers mit Ausnahme der letzten Ziffer

(6) Einfügen der schließendenden Klammer

(7) Beibehalten des restlichen Teils des Trailers als Durchwahl

(8) Fertig

(9) Wenn der auf | folgende Trailer mit der Ortsvorwahl des aktuellen Standorts beginnt, Umsetzung an Punkt 13 fortsetzen

(10) Wenn der auf | folgende Trailer nicht mit einer der Ortsvorwahlen beginnt, für die spezielle Ausnahmen definiert wurden (vergleiche untere Liste in der Figur 3), Umsetzung an Punkt 5 fortsetzen

(11) Einfügen des ersten Teils des Trailers, der gleich der Ortsvorwahlausnahme ist

(12) Umsetzung an Punkt 6 fortsetzen

(13) Einfügen des ersten Teils des Trailers, der gleich der Ortsvorwahl des aktuellen Standorts ist

(14) Umsetzung an Punkt 6 fortsetzen.

6. Verfahren nach einem der vorangehenden Ansprüche, **dadurch gekennzeichnet, dass** die Standortinformation in Microsoft TAPI vorliegt bzw. über dieses erfassbar ist.

7. Verfahren nach einem der vorangehenden Ansprüche, **dadurch gekennzeichnet, dass** die Standortinformation folgende Informationskomponenten umfasst:

- Länderkode
- Ortsvorwahl
- Bildungsregeln für Rufnummern für die Fälle

    (a) Rufnummer aus dem gleichen Ortsnetz
    (b) Rufnummer aus einem fremden Ortsnetz des gleichen Landes
    (c) Rufnummer aus einem fremden Land

- Information, ob innerhalb des gleichen Ortsnetzes die Ortsvorwahl immer gewählt werden muß
- eine Liste derjenigen Ziffernfolgen, die zu einem Voranstellen einer "1" führen, wenn eine Rufnummer mit dieser Folge innerhalb des gleichen Ortsnetzes beginnt
- eine Liste derjenigen Ortsvorwahlen, bei denen eine führende "1" unterdrückt wird
- mögliche vorbereitende und nachbereitende Wählanteile wie z. B. Amtskennziffern und Zusatznummern, sowie die Information, inwieweit diese Anteile über die Rückrufnummer mitgeliefert werden.

8. Verfahren nach einem der vorangehenden Ansprüche,
**dadurch gekennzeichnet, dass**
über eine TAPI-konforme CTI-Anwendung der zweite Transformationsschritt ausgeführt wird.

9. Verfahren nach einem der vorangehenden Ansprüche,
**dadurch gekennzeichnet, dass**
als Telekommunikationsnetz ein Festnetz oder ein Mobilfunknetz verwendet wird.

10. Verfahren nach einem der vorangehenden Ansprüche,
**dadurch gekennzeichnet, dass**
das spezifische, dem kanonischen Format ähnliche Format (NCF) eine schnelle indexunterstützte Suche innerhalb einer Datenbank ermöglicht.

11. Verfahren nach Anspruch 10,
**dadurch gekennzeichnet, dass**
die schnelle indexunterstützte Suche innerhalb der Datenbank mit einem einfachen "=" erfolgt.

12. Verfahren nach einem der vorangehenden Ansprüche,
**dadurch gekennzeichnet, dass**

das Verfahren in einem Call-Center angewandt wird.

**Claims**

1. Method for storing and processing dialable phone numbers of a telecommunication network, in particular in a telecommunication system connected to the telecommunication network,
**characterised**
**in that** the dialable phone numbers are transformed using a country code list and location information into a specific form (NCF) which is similar to the canonical form and which has worldwide validity, wherein in the specific form (NCF) a trailer consisting of a continuous sequence of numbers is formed, said trailer containing an area code and a local number or a network identifier and a local number of the phone numbers, wherein the specific form (NCF) has a "country code|trailer" structure,
**in that** the phone numbers are then stored together with an identifier of the specific form (NCF), and
**in that** in order to perform an address translation function the phone number is in a first transformation step converted from the specific form (NCF) into a phone number in a canonical form having the structure "+country code(area code)local number" and in a second transformation step is converted from this into a dialable phone number, wherein, in the case of a canonical phone number that is incorrectly split between area code and local number, said phone number is nevertheless faultlessly transformed into a dialable phone number.

2. Method according to claim 1, **characterised in that** the specific form (NCF) is identified by a preceding hyphen.

3. Method according to one of the preceding claims, **characterised in that** only the numbers 0 to 9 and no other characters or spaces are used to form the phone number components, i.e. the country code, the area code or the network identifier and the local number.

4. Method according to one of the preceding claims, **characterised in that** the second transformation step is carried out by means of a function such as the known function "lineTranslateAddress()" in Microsoft TAPI.

5. Method according to one of the preceding claims, **characterised in that** the first transformation step comprises the following sequence of sub-steps:

   (1) change "-" to "+"
   (2) retain country code in unmodified form
   (3) insert opening bracket
   (4) if the specified country code and the country code of the current location are the same, continue from point (9)
   (5) insert the trailer following "|", with the exception of the last number
   (6) insert the closing bracket
   (7) retain the rest of the trailer as the local number
   (8) ready
   (9) if the trailer following "|" starts with the area code of the current location, continue from point 13
   (10) if the trailer following "|" does not start with one of the area codes for which special exceptions have been defined (see bottom list in Fig. 3), continue from point 5
   (11) insert the first part of the trailer, which is the same as the area code exception
   (12) continue from point 6
   (13) insert the first part of the trailer, which is the same as the area code of the current location
   (14) continue from point 6.

6. Method according to one of the preceding claims, **characterised in that** the location information exists in Microsoft TAPI or can be detected via the latter.

7. Method according to one of the preceding claims, **characterised in that** the location information comprises the following information components:

   - country code
   - area code
   - rules for forming phone numbers for the scenarios

(a) phone number from the same local network
(b) phone number from a different local network in the same country
(c) phone number from a different country

- information as to whether the area code must always be dialled within the same local network
- a list of those sequences of numbers which lead to a preceding 1 being inserted when a phone number begins with this sequence within the same local network
- a list of those area codes for which a preceding "1" is eliminated
- possible preceding and trailing components to be dialled, such as for example external access codes and additional numbers, as well as information concerning the extent to which these components are supplied via the callback number.

8. Method according to one of the preceding claims, **characterised in that** the second transformation step is carried out via a TAPI-compliant CTI application.

9. Method according to one of the preceding claims, **characterised in that** a landline network or a mobile telephone network is used as the telecommunication network.

10. Method according to one of the preceding claims, **characterised in that** the specific form (NCF) similar to the canonical form allows a rapid, index-aided search within a database.

11. Method according to claim 10, **characterised in that** the rapid, index-aided search within the database takes place using a simple "=".

12. Method according to one of the preceding claims, **characterised in that** the method is applied in a call centre.

**Revendications**

1. Procédé de mémorisation et traitement de numéros de téléphone composables d'un réseau de télécommunication, en particulier dans une installation de télécommunication raccordée au réseau de télécommunication, **caractérisé en ce que** les numéros de téléphone composables sont transformés, en utilisant une liste de codes de pays et une information locale, dans un format spécifique (NCF), similaire au format canonique, ayant une validité mondiale, sachant qu'une bande, composée d'une séquence de chiffres continue, est formée avec le format spécifique (NCF), laquelle bande contient un indicatif régional et un numéro d'abonné respectivement un indicatif de réseau et un numéro d'abonné des numéros de téléphone, le format spécifique (NCF) présentant une structure « code de pays|bande »,
**en ce que** les numéros de téléphone sont enregistrés ensuite conjointement avec un signe distinctif du format spécifique (NCF), et
**en ce que**, pour l'exécution d'une fonction de traduction d'adresse, le numéro de téléphone est converti dans une première étape de transformation à partir du format spécifique (NCF) en un numéro de téléphone dans un format canonique avec la structure « +code de pays(indicatif régional)numéro d'abonné » et à partir de ce format au cours d'une deuxième étape de transformation en un numéro de téléphone composable,
dans le cas d'un numéro de téléphone canonique incorrectement séparé entre l'indicatif régional et le numéro d'abonné, ce numéro est néanmoins transformé sans erreur en un numéro de téléphone composable.

2. Procédé selon la revendication 1,
**caractérisé en ce que**
le signe distinctif du format spécifique (NCF) est exécuté en plaçant en tête un trait d'union.

3. Procédé selon l'une quelconque des revendications précédentes, **caractérisé en ce que**
l'on emploie uniquement les chiffres 0 à 9 et aucun autre caractère ni espace vide pour la formation des parties composantes du numéro de téléphone, c'est-à-dire du code de pays, de l'indicatif régional respectivement de l'indicatif de réseau et du numéro d'abonné.

4. Procédé selon l'une quelconque des revendications précédentes, **caractérisé en ce que**
la deuxième étape de transformation est exécutée au moyen d'une fonction telle que la fonction connue "lineTranslateAddress()" dans Microsoft TAPI.

**5.** Procédé selon l'une quelconque des revendications précédentes, **caractérisé en ce que**
la première étape de transformation comporte les étapes partielles suivantes :

(1) convertir "-" en "+"
(2) laisser le code de pays inchangé
(3) ajouter une parenthèse ouvrante
(4) si le code de pays indiqué et le code de pays du lieu courant concordent, poursuivre la conversion au point 9
(5) ajouter la bande à la suite de « | » à l'exception du dernier chiffre
(6) ajouter la parenthèse fermante
(7) conserver la partie restante de la bande en tant que numéro d'appel direct
(8) terminé
(9) si la bande à la suite de | commence avec l'indicatif régional du lieu actuel, poursuivre la conversion au point 13
(10) si la bande à la suite de | ne commence pas par un des indicatifs de localité, pour lequel des exceptions spéciales ont été définies (comparer à la liste de la figure 3), poursuivre la conversion au point 5
(11) ajouter la première partie de la bande, qui est identique à l'exception d'indicatif régional
(12) poursuivre la conversion au point 6
(13) ajouter la première partie de la bande, qui est identique à l'indicatif régional du lieu actuel
(14) poursuivre la conversion au point 6.

**6.** Procédé selon l'une quelconque des revendications précédentes, **caractérisé en ce que**
les informations locales sont présentes dans Microsoft TAPI ou peuvent être saisies par le biais de Microsoft TAPI.

**7.** Procédé selon l'une quelconque des revendications précédentes, **caractérisé en ce que**
les informations locales comportent des composantes d'information suivantes :

- code de pays
- indicatif régional
- règles de formation pour des numéros de téléphone pour les cas :

(a) numéro de téléphone du même réseau local
(b) numéro de téléphone d'un autre réseau local du même pays
(c) numéro de téléphone d'un autre pays

- informations si l'indicatif régional doit toujours être composé à l'intérieur du même réseau local
- une liste des séquences de chiffres qui mènent à placer en tête un « 1 » si un numéro de téléphone commence avec cette séquence dans le même réseau local
- une liste des indicatifs de localité pour lesquels un « 1 » en tête est supprimé
- possibles parties de numérotation servant de préfixe ou de suffixe, telles que, par exemple, des chiffres indicatifs d'accès à la ligne extérieure et des numéros supplémentaires, ainsi que les informations, dans la mesure où ces parties sont livrées par le numéro de rappel.

**8.** Procédé selon l'une quelconque des revendications précédentes, **caractérisé en ce que**
la deuxième étape de transformation est effectuée par une application CTI conforme à TAPI.

**9.** Procédé selon l'une quelconque des revendications précédentes,
**caractérisé en ce que**
un réseau du service fixe ou un réseau de téléphonie mobile est employé en tant que réseau de télécommunication.

**10.** Procédé selon l'une quelconque des revendications précédentes,
**caractérisé en ce que**
le format spécifique (NCF) similaire au format canonique permet une recherche rapide assistée par des indices dans une banque de données.

**11.** Procédé selon la revendication 10,
**caractérisé en ce que** la recherche rapide assistée par des indices dans la banque de données a lieu avec un simple « = ».

**12.** Procédé selon l'une quelconque des revendications précédentes,

**caractérisé en ce que** le procédé est appliqué dans un centre d'appels.

# FIG 1

Wählparameter         [?] [X]

Standorte | Telefonietreiber

Standort:

| SiemensPB ▼ |  | Neu.. |  | Entfernen |

Land/Region:        Ortskennzahl:

| Deutschland ▼ |  | 5251 |  | Wähloptionen... |

┌─ Von diesem Standort aus wählen ──────────

Amtskennziffer:

     für Ortsgespräche:    [0]

     für Ferngespräche:    [0]

☐ Wartefunktion beim Wählen deaktivieren: [     ▼]

Wählverfahren: ⊙ MFV[Ton] ○ IWV[Impuls]

☐ Diese Telekarte für Ferngespräche verwenden

| keine [Direktwahl] ▼ |  | Telekarte... |

| OK |    | Abbrechen |    | Übernehmen |

# FIG 2

Wählparameter                                                    [?] [X]

Standorte [Telefonietreiber]

Standort:

| Bahamas Urlaub ▼ |    [Neu..]    [Entfernen]

Land/Region:                    Ortskennzahl:

| Bahamas ▼ |    | 3234 |    [Wähloptionen...]

┌─ Von diesem Standort aus wählen ──────────────────
│ Amtskennziffer:
│        für Ortsgespräche:    □
│        für Ferngespräche:    □
│
│ □ Wartefunktion beim Wählen deaktivieren: | ▼ |
│
│ Wählverfahren: ⊙ MFV[Ton]  ○ IWV[Impuls]
├──────────────────────────────────────────────────
│ □ Diese Telekarte für Ferngespräche verwenden
│ | keine [Direktwahl] ▼ |    [Telekarte...]
└──────────────────────────────────────────────────

[ OK ]    [Abbrechen]    [Übernehmen]

# FIG 3

| Wähloptionen | ? | X |

**┌─ Innerhalb der gleichen Ortskennzahl ──────**

☑ Immer Ortskennzahl wählen

1 wählen für Rufnummern folgender
Vorwahlbereiche:

| 270
| 432 |

Neu..

Entfernen...

**┌─ Außerhalb der gleichen Ortskennzahl ──────**

Keine 1 wählen für Rufnummern
folgender Vorwahlbereiche:

| 272
| 434 |

Neu..

Entfernen...

OK    Abbrechen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19828400 A1